# EUROPÄISCHE PATENTSCHRIFT

(11) **EP 0 365 696 B1**
(45) Veröffentlichungstag und Bekanntmachung des Hinweises auf die Patenterteilung: **08.02.1995**
(21) Anmeldenummer: 88117678.8
(22) Anmeldetag: 24.10.1988
(51) Int. Cl.: H04B 3/54, H04L 12/10

(54) **Übertragungssystem**
Transmission system
Système de transmission

(43) Veröffentlichungstag der Anmeldung: 02.05.1990
(73) Patentinhaber: SIEMENS AKTIENGESELLSCHAFT, 80333 München (DE)
(72) Erfinder: Ott, Hans, Ing. grad., D-8400 Regensburg (DE); Zierhut, Hermann, D-8402 Neutraubling (DE)

(56) Entgegenhaltungen:
- DE-A- 2 113 931
- DE-A- 3 322 152
- FR-A- 2 584 555

## Beschreibung

Die Erfindung bezieht sich auf ein Übertragungssystem zur Ankopplung von Sende- und Empfangsstationen an einem Zweileiter-Netz, das Gleichstrom zur Versorgung des Bordnetzes zumindest einer Station zuführt, das für Nachrichtenverkehr, beispielsweise mit digitaler Datenübertragung zum Messen und Steuern und bzw. oder mit Analogsignalen zum Messen und Steuern und zur Sprachübertragung ausgelegt ist, im einzelnen nach Gattungsbegriff von Patentanspruch 1. Die Nachricht ist hierbei als vollsymmetrische Wechselspannung bezüglich mittig gedachter schwebender Erde überlagerbar, wobei die Ankopplung durch eine Weiche für Energie und Nachrichten erfolgt, die die Nachricht galvanisch vom Energiepfad getrennt einkoppelt. Die Weiche für Energie und Nachricht arbeitet mit einem Übertrager.

Bei einer bekannten derartigen Anordnung (DE-A-2 113 931) wird jeweils ein Sender über Leitungen mit einem Empfänger verbunden, wobei mehrere Sender sternförmig an einer zentralen Empfangsstation jeweils mittels eines Zweileiter-Netzes angeschlossen sind. Dieses Netz führt auch Gleichstrom zur Versorgung des Bordnetzes der jeweiligen Sendestation zu. Als Weiche für Energie und Nachrichten wird jeweils am Anfang und Ende der Übertragungsleitung ein Übertrager verwendet, wobei Übertragerspulen in Reihe in der Übertragungsleitung angeordnet sind. Ein Bus-System mit mehreren gleichberechtigten Teilnehmerstationen in einem Zweileiter-Netz läßt sich hiernach nicht aufbauen.

Bus-Systeme sind in den verschiedenartigsten Ausführungen und mit den verschiedenartigsten Übertragungsphilosophien bekannt. Es können digitale Daten übertragen werden zum Messen oder Steuern oder es können Analogsignale übertragen werden. Bus-Systeme eignen sich auch zur Sprachübertragung.

Mit einem Bus in Verbindung stehende Stationen werden über Ankopplungseinrichtungen, sogenannte Bus-Ankoppler, angeschlossen. Außer datenverarbeitenden Stationen ist es bekannt, auch andere Stationen wie Sensoren, Installationsgeräte und motorisch angetriebene Geräte wie Jalousien zu betreiben. Das System kann zentral oder dezentral ausgeführt sein, wobei außer der Information, den Nachrichten, auch die Energie für die Bordnetze zuzuführen ist. Außerdem sind Energieverbrauchern wie Motoren, Leuchten oder Heizgeräten auch die Verbraucherenergie zuzuführen.

Entscheidend für die Wirtschaftlichkeit eines Bus-Systems ist das Zusammenspiel zwischen Bus und Bus-Ankopplern sowie die Anzahl der forderlichen Übertragungswege.

Der Erfindung liegt die Aufgabe zugrunde, einen wirtschaftliches Übertragungssystem unter Einsatz von Ankopplungseinrichtungen zu entwickeln.

Die Lösung der geschilderten Aufgabe besteht nach der Erfindung in einem Übertragungssystem nach Patentanspruch 1. Zur Ankopplung von mehr als zwei Stationen an einem Bus und zum Aus- bzw. Einkoppeln von Nachrichten, dient jeweils eine Ankopplungseinrichtung, Bus-Ankoppler, wobei der andere Zweig des Übertragers als Bus-Zweig mit den Bus-Leitern verbindbar ist. Der Bus-Zweig des Übertragers ist in an sich bekannter Weise durch einen Kondensator hinsichtlich des Energiepfades unterbrochen, wobei der Kondensator den Nachrichtenpfad schließt. Für den Nachrichtenverkehr wird vollsymmetrische Wechselspannung bezüglich mittig gedachter schwebender Erde überlagert. Hierbei wird die Nachricht galvanisch vom Energiepfad getrennt aus- bzw. eingekoppelt. Über den Bus können digitale und bzw. analoge Daten zum Messen und Steuern sowie Sprache übertragen werden. Das System läßt sich besonders einfach ausführen, ermöglicht Baumstrukturen und benötigt für Nachrichtenübertragung und für die Übertragung von Energie für die Bordnetze lediglich zwei Leiter. Dabei ist man in der Wahl der Spannungshöhe für die Energieversorgung der Bordnetze frei von der Spannungshöhe für die Nachrichtenübertragung. Für eine Reihe von Anwendungen ist es günstig, die Spannung der Bordnetze niedriger zu wählen als die Spannung der anzusteuernden Energieverbraucher. Durch die galvanische Trennung vermeidet man sonst häufig störende Brummschleifen im Signalpfad. Die Betriebsspannung für die Bordnetze läßt sich dabei als unterbrechungsfreie Gleichstromübertragung ausführen.

Ein weiterer Vorteil besteht darin, daß die Übertragerspule im Nachrichtenpfad in ihrem Potential frei wählbar ist und den Erfordernissen hinsichtlich der Impedanz der Ankopplungsschaltung und bzw. oder der Bus-Impedanz angepaßt werden kann. Hierbei ist bedeutsam, daß bei der erfindungsgemäßen Anordnung nur geringe Anpassungsverluste entstehen. Wesentlich höhere Verluste treten bei den üblichen galvanischen Ankopplungen nach dem allgemeinen Stand der Technik auf.

Ein wesentlicher Vorteil, die Empfänger galvanisch vom Bus zu trennen, was beispielsweise kapazitiv, induktiv oder optisch erfolgen kann, liegt weiter darin, daß die Nachricht durch die Energietransformation von Störgrundgrößen auf dem Bus, wie beispielsweise der Betriebsspannung und deren Schwankungen, frei wird.

Wegen der symmetrischen Übertragung heben sich nach außen gesehen die Signale gegenseitig auf, da zu jeder momentan positiven Signalamplitude eine gleich große negative besteht - und umgekehrt. Dies bedeutet, daß von den Bus-Leitungen nur sehr geringe Störabstrahlungen erfolgen können. Die symmetrische Übertragung bewirkt außerdem in Verbindung mit dem Übertrager eine sehr hohe Störfestigkeit bezüglich einer Fremdsignaleinstreuung auf die Bus-Leitungen, weil über den Übertrager nur Differenzsignale gelangen können, nicht aber Gleichtaktsignale, wie sie im wesentlichen von äußeren Störquellen verursacht werden. Ohne dieses Übertragerprinzip müßten bei Gleichtaktstörungen die am Bus angeschlossenen Bauteile leistungsstärker und unwirtschaftlicher bemessen werden.

Der Kondensator, der den Nachrichtenpfad im Bus-Zweig schließt und der hinsichtlich des Energiepfades eine Unterbrechung darstellt, kann gleichzeitig zu Glättung oder als Energiespeicher für kurzzeitige Unterbrechung der Bordnetz-Versorgung dienen. Es lassen sich zugleich alle drei Funktionen mit einem Kondensator erfüllen.

Bei Nachrichtenübertragungssystemen ist es seit langem bekannt, mehrere Nachrichtenwege, z.B. für Wechselsignale und Gleichstromsignale, überlagert auf einer Zweidrahtleitung zu führen; bei Bus-Systemen ist es jedoch bisher üblich, eigene Energieversorgungsleitungen vorzusehen oder beispielsweise mit modulierten Energieversorgungen zu arbeiten oder die Nachrichtentelegramme in Versorgungslücken zu übertragen.

Zur Übertragung von Breitbandsignalen ist es bekannt (FR-A-2 584 555) mehr als zwei Stationen mittels Ankopplungseinrichtungen nebeneinander parallel und voneinander unabhängig auf einen gemeinsamen Bus arbeiten zu lassen. Hierbei handelt es sich jedoch um ein verdecktes Dreileitersystem, bei dem der dritte Leiter durch Erdpotential realisiert wird. Ein derartiges System ermöglicht nicht zugleich die Gleichstromversorgung für die Ortnetze der Teilnehmerstationen.

Es ist besonders vorteilhaft, das Übertragungssystem gemäß einer Weiterbildung nach Anspruch 2 mit zumindest einer Ankopplungseinrichtung auszuführen, bei der der Nachrichtenzweig des Übertragers unter Berücksichtigung des Wicklungssinns der Übertragungsspulen hinsichtlich der Polarität der Signalimpulse der Nachrichten so an der Ankopplungsschaltung angeschlossen ist, daß sein magnetisches Feld im wesentlichen dem magnetischen Feld des Bus-Zweiges infolge einer Gleichstromvormagnetisierung durch die zugeführte Gleichstromenergie entgegengerichtet ist. Dadurch wird ausgehend vom Arbeitspunkt in der Transformatorkennlinie, der vom Ursprung in Richtung Sättigungsbereich verschoben liegt, der Betrieb in Richtung des Ursprungs oder darüber hinaus zurückverlagert. Dadurch wird im günstigeren linearen Kennlinienbereich gearbeitet und man kommt mit weniger Senderleistung aus.

Die Erfindung soll nun anhand von in der Zeichnung grob schematisch wiedergegebenen Ausführungsbeispielen näher erläutert werden:

In FIG 1 sind Bus-Ankoppler im Zusammenspiel mit einem Bus und Installationsgeräten veranschaulicht.

In FIG 2 ist in einem Diagramm der Signalverlauf auf dem Bus wiedergegeben.

In FIG 3 ist eine Installationsanlage mit Bus-System schematisch dargestellt.

In FIG 4 sind anhand der Transformatorkennlinie des Bus-Ankopplers Arbeitspunkt und Betrieb nach einer Weiterbildung veranschaulicht.

Das Übertragungssystem arbeitet mit einer Ankopplungseinrichtung, im nachstehenden Bus-Ankoppler 1 genannt, zur Ankopplung von Sende- und Empfangsstationen 2 an einen Zweileiter-Bus 3. Dieser führt sowohl Gleichstrom zur Versorgung der Bordnetze der Stationen 2 als auch Signale für den Nachrichtenverkehr. Jeder Bus-Ankoppler 1 weist eine Weiche 4 für Energie und Nachricht auf, wobei die Nachricht galvanisch vom Energiepfad getrennt aus- bzw. eingekoppelt wird. Ein Spannungsversorger 5 besteht im wesentlichen aus einem Wechselstrom-Gleichstromwandler 6 und aus einer Sperrdrossel 7.

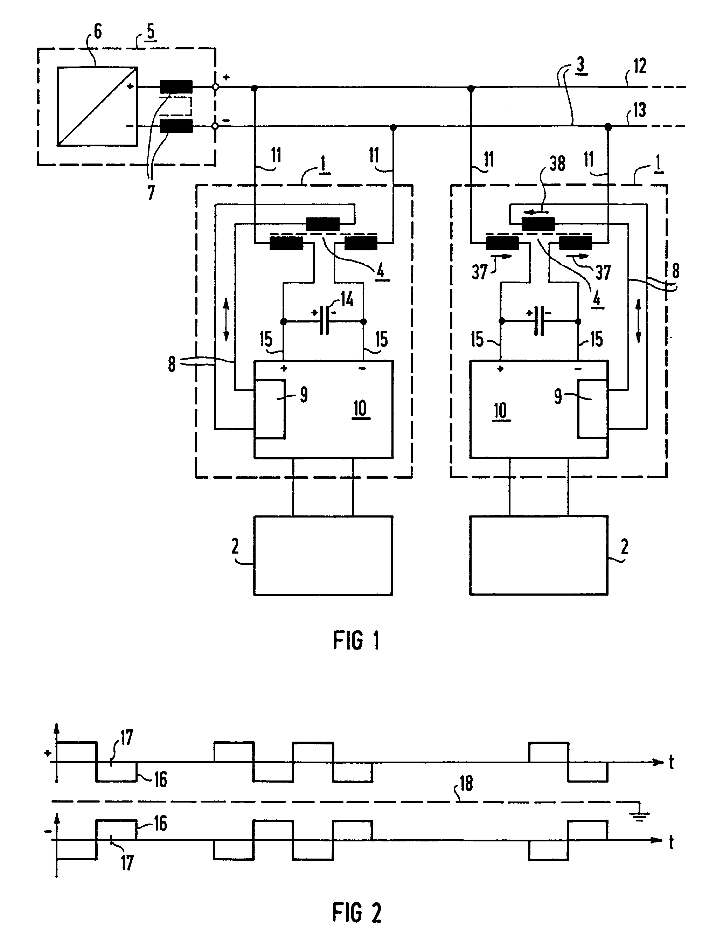

Die Weiche 4 für Energie und Nachrichten weist im Ausführungsbeispiel nach FIG 1 einen Übertrager auf, dessen einer Zweig 8 zum transformatorischen Aus- bzw. Einkoppeln von Nachrichten als Nachrichtenzweig 8 mit einem Transceiver 9 einer Ankopplungsschaltung 10 verbunden ist. Der Transceiver sorgt für die Aufbereitung der Sende- bzw. Empfangssignale. Die Ankopplungsschaltung übernimmt darüber hinaus die Aufbereitung und die Verarbeitung der zu übermittelnden Nachrichten. Der andere Zweig des Übertragers ist als Bus-Zweig 11 mit den Bus-Leitern 12, 13 verbunden. Der Bus-Zweig 11 des Übertragers ist durch einen Kondensator 14 hinsichtlich des Energiepfades unterbrochen. Der Nachrichtenpfad ist dabei über den Kondensator 14 geschlossen. Von der Unterbrechungsstelle gehen Verbindungsleiter als Energiezweig 15 zur Ankopplungsschaltung 10. Sie dienen der Energieversorgung der Ankopplungsschaltung 10 und gegebenenfalls auch der Energieversorgung angeschlossener Stationen und Geräte.

Der Spannungsverlauf auf den Bus-Leitern 12 und 13 3 ist in FIG 2 beispielhaft dargestellt. Der Spannungsverlauf auf dem Leiter 13 sei auf der unteren Zeitachse und der Spannungsverlauf auf dem Leiter 12 auf der oberen Zeitachse dargestellt. Der untere Leiter befindet sich dann auf negativem Gleichstrompotential und der obere Leiter auf positivem Gleichstrompotential. Überlagert ist eine vollsymmetrische Wechselspannung 16. Auf der Abszisse des Diagramms ist die Zeit und auf der Ordinate die Spannung aufgetragen. Zum Zeitpunkt 17 ist der negativen Gleichspannung auf dem unteren Leiter eine positive Wechselspannung überlagert und auf dem oberen Leiter der positiven Gleichspannung eine negative Wechselspannung. Bezüglich einer mittig gedachten schwebenden Erde 18 ist die überlagerte Wechselspannung für die Nachrichtenübertragung symmetrisch.

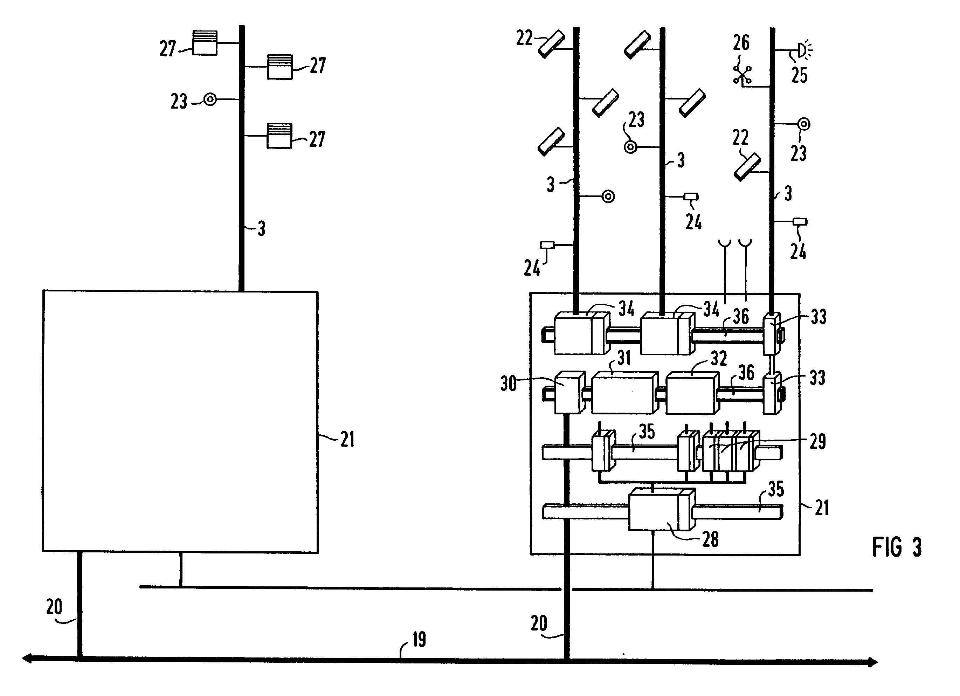

Im Anwendungsbeispiel nach FIG 3 gehen von einem Haupt-Bus 19 Abzweige 20 zu Installationsverteilungsanlagen 21 ab. Von diesen führen jeweils ein Bus 3 als weitere Verzweigungen, als Linien-Bus, zu Sende- und Empfangsstationen. Im Ausführungsbeispiel sind das Installationsgerät, wie Leuchten 22, Taster 23, Infrarotsender und -empfänger 24, Lichtsensoren 25, Windsensoren 26 und Jalousien 27 bzw. deren Motorantriebe. In der Verteilung 21 können beispielsweise Fehlerstromschutzschalter 28, Leitungsschutzschalter 29, Bus-Ankoppler 30 anderer Art, Controler 31, Spannungsversorger 32, Verbinder 33 und Linienmodule 34 auf Tragschienen 35 und 36 angeordnet sein. Hierbei übernehmen die Tragschienen 36 zugleich Bus-Funktionen. Der Spannungsversorger 5 nach FIG 1 kann als Spannungsversorgung 32 oder als Linienmodul 34 verstanden werden, wobei die Linienmodule 34 in an sich bekannter Weise weitere Funktionen übernehmen.

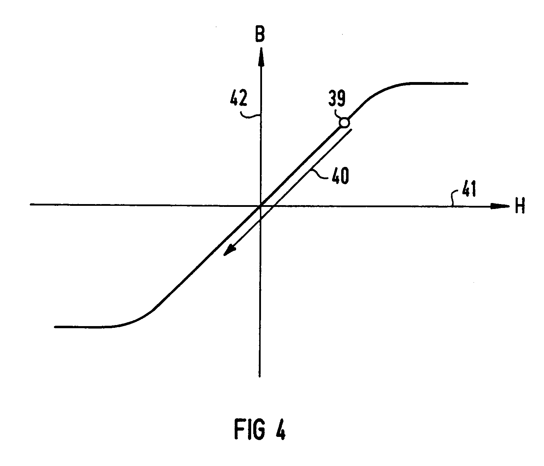

Im Ausführungsbeispiel nach FIG 1 weist der rechte Bus-Ankoppler 1 nach einer Weiterbildung die Besonderheit auf, daß der Nachrichtenzweig 8, der als Übertrager ausgebildeten Weiche 4 unter Berücksichtigung des Wicklungssinns der Übertragerspulen hinsichtlich der Polarität der Signalimpulse der Nachrichten so an der Ankopplungsschaltung 10 angeschlossen ist, daß das Feld im Nachrichtenzweig im wesentlichen dem Feld des Bus-Zweiges 11 entgegengerichtet ist, wie es durch die Pfeile 37 im Bus-Zweig 11 und 38 im Nachrichtenzweig 8 veranschaulicht ist. Dabei entsteht das Feld im Bus-Zweig durch eine Gleichstromvormagnetisierung infolge der zugeführten Gleichstromenergie. Die Pfeile zeigen in Richtung des magnetischen Flusses in der Spule. Anhand der Magnetisierungskurve bzw. Transformatorkennlinie im Diagramm nach FIG 4 wird also der Betrieb vom Arbeitspunkt 39 aus in Richtung des Pfeiles 40 zum Ursprung bzw. in den linearen Teil der Kennlinie hinein verlegt. Auf der Abszisse ist die Feldstärke H und auf der Ordinate die magnetische Induktion B aufgetragen. Die erforderliche Sendeenergie kann deshalb verringert werden.

## Patentansprüche

1. Übertragungssystem zur Ankopplung von Sende- und Empfangsstationen (2) an einem Zweileiter-Netz, das Gleichstrom zur Versorgung des Bordnetzes zumindest einer der Stationen (2) zuführt, das für Nachrichtenverkehr, beispielsweise mit digitaler Datenübertragung zum Messen und Steuern und bzw. oder mit Analogsignalen zum Messen und Steuern und zur Sprachübertragung, dadurch ausgelegt ist, daß die Nachricht als vollsymmetrische Wechselspannung, bezüglich mittig gedachter schwebender Erde (18), überlagerbar ist, wobei die Ankopplung durch eine Weiche (4) für Energie und Nachrichten erfolgt, die die Nachricht galvanisch vom Energiepfad getrennt einkoppelt, wobei die Weiche (4) für Energie und Nachrichten einen Übertrager aufweist, dessen einer Zweig zum transformatorischen Einkoppeln von Nachrichten als Nachrichtenzweig (8) mit einer Ankopplungsschaltung (10) verbunden ist und dessen anderer Zweig durch einen Kondensator (14), zum Schließen des Nachrichtenpfades, hinsichtlich des Energiepfades unterbrochen ist, wobei von der Unterbrechungsstelle aus Verbindungsleiter als Energiezweig (15) zur Ankopplungsschaltung (10) geführt sind, für deren Energieversorgung, **dadurch gekennzeichnet**, daß zur Ankopplung von mehr als zwei Stationen an einen Bus (3) und zum Aus- bzw. Einkoppeln von Nachrichten, jeweils eine Ankopplungseinrichtung (Busankoppler 1) vorgesehen ist, wobei der andere Zweig des Übertragers als Bus-Zweig (11) mit den Bus-Leitern (12,13) verbindbar ist, wobei die Ankopplungsschaltung (10) zum Aus-bzw. Einkoppeln von Nachrichten ausgelegt ist.

2. Übertragungssystem nach Anspruch 1, **gekennzeichnet** durch eine Ankopplungseinrichtung (Bus-Ankoppler 1), bei der der Nachrichtenzweig (8) der Übertragerspulen hinsichtlich der Polarität der Signalimpulse der Nachricht so an der Ankopplungsschaltung (10) angeschlossen ist, daß ihr Feld im wesentlichen dem Feld des Bus-Zweiges (11) infolge einer Gleichstromvormagnetisierung durch die zugeführte Gleichstromenergie entgegengerichtet ist.

## Claims

1. A transmission system for the coupling of transmitting- and receiving stations (2) to a two-conductor network which conveys direct current for the supply of the on-board network of at least one of the stations (2), which is designed for information traffic, for example with digital data transmission for measurement and control and/or with analogue signals for measurement and control and for speech transmission, in that the information can be superimposed as a fully symmetrical a.c. voltage relative to an imaginary centralized floating earth (18), where the coupling takes place by means of a switch (4) for power and information which input-couples the information so as to be d.c.-isolated from the power path, where the switch (4) for power and information comprises a transformer, one branch of which, for the input coupling of information by transformer, is connected as information branch (8) to a coupling circuit (10) and the other branch of which is interrupted in respect of the power path by a capacitor (14) which closes the information path, where connection lines lead from the interruption point as energy branch (15) to the coupling circuit (10) for the power supply of said coupling circuit (10), characterised in that for the coupling of more than two stations to a bus (3) and for the output- and input-coupling of information a respective coupling device (bus coupler 1) is provided, where the other branch of the transformer can be connected as bus branch (11) to the bus conductors (12, 13) and where the coupling circuit (10) is designed for the output- and input-coupling of information.

2. A transmission system as claimed in Claim 1, characterised by a coupling device (bus coupler 1), where, in respect of the polarity of the signal pulses of the information, the information branch (8) of the transformer coils is connected to the coupling circuit (10) in such manner that its field is substantially oppositely directed to the field of the bus branch (11) as a result of d.c. premagnetization by the supplied d.c. power.

## Revendications

1. Système de transmission pour le couplage de postes émetteurs/récepteurs (2) à un réseau à deux conducteurs, qui envoie du courant continu pour alimenter le réseau de bord d'au moins l'un des postes (2), qui est conçu pour le trafic d'informations, par exemple avec une transmission numérique de données pour la mesure et la commande et/ou avec des signaux analogiques pour la mesure et la commande et pour la transmission de signaux vocaux, par le fait que l'information peut être superposée sous la forme d'une tension alternative totalement symétrique, par rapport à une masse flottante médiane virtuelle (18), le couplage s'effectuant au moyen d'un répartiteur (4) pour l'énergie et les informations, qui injecte les informations d'une manière isolée galvaniquement de la voie de transmission de l'énergie, le répartiteur(4) pour l'énergie et les informations comportant un transformateur, dont une branche est reliée en tant que branche (8) de transmission d'informations à un circuit de couplage (10), pour l'injection par couplage d'informations au moyen du transformateur, et dont l'autre branche est interrompue par un condensateur (14), pour la fermeture de la voie de transmission d'informations, par rapport à la voie de transmission de l'énergie, et des conducteurs de liaison étant reliés en tant que branche de transmission d'énergie (15), à partir du point d'interruption au circuit de couplage (10), pour l'alimentation en énergie de ce circuit, caractérisé par le fait que pour le couplage de plus de deux postes à un bus (3) et pour le prélévement et l'injection par couplage d'informations, il est prévu pour chacun un dispositif de couplage (dispositif 1 de couplage de bus), l'autre branche du transformateur pouvant être reliée, en tant que branche de bus (11), aux conducteurs (12,13) du bus, le circuit de couplage (10) étant conçus pour le prélévement et l'injection par couplage d'informations.

2. Système de transmission suivant la revendication 1, caractérisé par un dispositif de couplage (dispositif 1 de couplage de bus), dans lequel la branche de transmission d'informations (8) des bobines du transformateur est raccordée, par rapport à la polarité des impulsions de signaux de l'information, au circuit de couplage (10) de telle sorte que le champ de cette branche de transmission d'informations soit dirigé essentiellement en sens opposé au champ de la branche de bus (11) en raison d'une préaimantation en courant continu par l'énergie en courant continu envoyée.
